(19) Europäisches Patentamt
European Patent Office
Office européen des brevets

(11) **EP 2 778 979 A1**

(12) **EUROPEAN PATENT APPLICATION**

(43) Date of publication:
17.09.2014 Bulletin 2014/38

(51) Int Cl.:
*G06F 17/30* (2006.01)

(21) Application number: 14159502.5

(22) Date of filing: 13.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.03.2013 US 201313829504

(71) Applicant: Wal-Mart Stores, Inc.
Bentonville, AR 72716 (US)

(72) Inventors:
• Cheng, Jinxing
  Bentonville, AR 72716 (US)
• Gattani, Abhishek
  Bentonville, AR 72716 (US)

(74) Representative: Brandon, Paul Laurence
Appleyard Lees
15 Clare Road
Halifax, HX1 2HY (GB)

(54) **Search result ranking by brand**

(57) Systems and methods are disclosed herein for providing search results, particularly product records from a product database. For an individual query, relevant search results are identified and brands corresponding thereto are also identified. Brands are then ranked according to the popularity and representation in the search results. Popularity may be a function of click-through rate for results corresponding to a brand as well as a function of sales and cultural popularity. One or more brands are selected according to the ranking. Search results filtered according to one or more selected brands are transmitted to an author of the query. Results may be transmitted with interface elements for selecting a brand to invoke display of search results belonging to a brand.

Fig. 1

**Description**

BACKGROUND

FIELD OF THE INVENTION

This invention relates to systems and methods for responding to search queries, and, more particularly, to searches for products in a product database.

BACKGROUND OF THE INVENTION

It is the goal of many online retailers to be a one-stop-shop for customers. Accordingly, the retailer may have a very large array of products. In order to better meet the needs of customers, many retailers also integrate products of other merchants into their websites, further increasing the number of products available. With so many products offered for sale, it can be difficult for a customer to find a desired product through a search. Many retailers offer free-form text searches of their product databases. However, the large number of products available provides many opportunities for matching but irrelevant products.

Accordingly, it would be an advancement in the art to provide an improved approach to performing product-based searches that increases the relevance of search results to a user.

SUMMARY OF THE INVENTION

According to the present invention in a first aspect, there is provided a method for searching, the method comprising: receiving, by a computer system, a query; identifying, by the computer system, a plurality of product records relevant to the query; identifying, by the computer system, a plurality of brands associated with the plurality of product records; selecting, by the computer system, one or more selected brands from the plurality of brands according to both a popularity of each brand of the plurality of brands and a representation of each brand in the search results; and transmitting, by the computer system, a representation of the plurality of product records in accordance with the one or more selected brands.

According to the present invention in a second aspect, there is provided a system for searching, the system comprising one or more processors and one or more memory devices operably coupled to the one or more processors, the one or more memory devices storing executable and operational data effective to cause the one or more processors to: receive a query; identify a plurality of product records relevant to the query; identify a plurality of brands associated with the plurality of product records; select one or more selected brands from the plurality of brands according to both a popularity of each brand of the plurality of brands and a representation of each brand in the search results; and transmit a representation of the plurality of product records in accordance with the one or more selected brands.

Suitably, the confidence score for a brand of the plurality of brands is calculated according to a click-through rate for search results corresponding to the brand.

Suitably, the confidence score (CS) for the each brand is calculated according to

$$CS = \ ctr - Z\sqrt{ctr * (1 - ctr)/N}$$

where ctr is a ratio of user selections to user impressions corresponding to the each brand, N is the number of user impressions corresponding to the each brand, and Z is an arbitrary constant.

Suitably, Z is greater than or equal to 1.96.

Suitably, transmitting, by the computer system, the representation of the plurality of documents in accordance with the one or more selected brands further comprises: transmitting those documents of the plurality of documents corresponding to the one or more selected brands.

Suitably, the executable and operational data are further effective to cause the one or more processors to: transmit the representation of the plurality of product records in accordance with the one or more selected brands further comprises: transmit data defining an interface presenting those product records of the plurality of product records corresponding to the selected brands and interface elements to invoke display of those product records of the plurality of product records corresponding to a brand other than one of the one or more selected brands

Further features of the present invention are set out in the appended claims.

BRIEF DESCRIPTION OF THE DRAWINGS

In order that the advantages of the invention will be readily understood, a more particular description of the invention will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings, in which:

> Fig. 1 is a schematic block diagram of a system for performing methods in accordance with embodiments of the present invention;
> Fig. 2 is a block diagram of a computing device suitable for implementing embodiments of the present invention;
> Fig. 3 is a schematic block diagram of modules implementing methods in accordance with embodiments of the present invention;
> Fig. 4 is a process flow diagram of a method for selecting search results according to brand in accordance with an embodiment of the present invention; and
> Fig. 5 is a process flow diagram of an alternative method for selecting search results according to brand in accordance with an embodiment of the present invention.

DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

The invention has been developed in response to the present state of the art and, in particular, in response to the problems and needs in the art that have not yet been fully solved by currently available apparatus and methods.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a non-transitory computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on a computer system as a stand-alone software package, on a stand-alone hardware unit, partly on a remote computer spaced some distance from the computer, or entirely on a remote computer or server. In the latter scenario, the remote computer may be connected to the computer through any type of network, including a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

Embodiments can also be implemented in cloud computing environments. In this description and the following claims, "cloud computing" is defined as a model for enabling ubiquitous, convenient, on-demand network access to a shared pool of configurable computing resources (e.g., networks, servers, storage, applications, and services) that can be rapidly provisioned via virtualization and released with minimal management effort or service provider interaction, and then scaled accordingly. A cloud model can be composed of various characteristics (e.g., on-demand self-service, broad network access, resource pooling, rapid elasticity, measured service, etc.), service models (e.g., Software as a Service ("SaaS"), Platform as a Service ("PaaS"), Infrastructure as a Service ("IaaS"), and deployment models (e.g., private cloud, community cloud, public cloud, hybrid cloud, etc.).

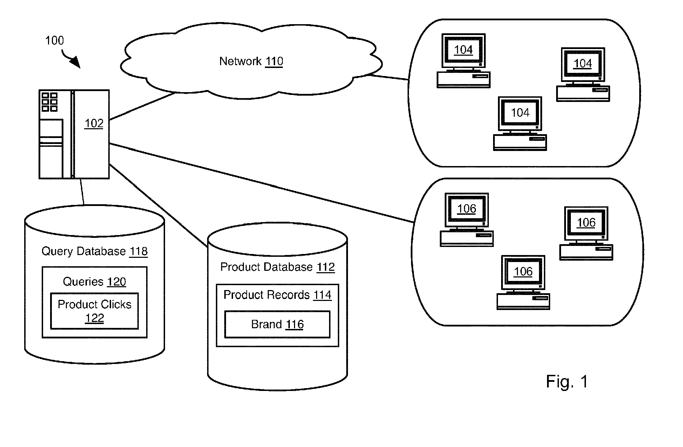

Fig. 1 illustrates a system 100 in which methods described hereinbelow may be implemented. The system 100 may include one or more server systems 102 that may each be embodied as one or more server computers each including one or more processors that are in data communication with one another. The server system 102 may be in data communication with one or more merchant workstations 104 and one or more customer workstations 106. In the methods disclosed herein, the merchant workstations 104 and customer workstations 106 may be embodied as mobile devices such as desktop computers or other computing device such as a mobile phone or tablet computer.

In some embodiments, some or all of the methods disclosed herein may be performed using a desktop computer or any other computing device as the merchant workstations 104 and customer workstations 106. For purposes of this disclosure, discussion of communication with a user or entity or activity performed by the user or entity (e.g. analyst, customer, merchant) may be interpreted as communication with a computer 104, 106 associated with the user or entity or activity taking place on a computer associated with the user or entity. The merchant workstations 104 may be viewed as a merchant computer network 104 whereby tasks to be performed by a merchant representative may be performed by any member of the population by means of logic implemented by the computer network, the server system 102, or some other entity.

Some or all of the server 102, merchant computers 104, and customer workstations may communicate with one another by means of a network 110. The network 110 may be embodied as a peer-to-peer connection between devices, a connection through a local area network (LAN), WiFi network, the Internet, or any other communication medium or system. Each of the populations 104, 106 of workstations may be coupled to one another by separate networks some or all of the three populations 104, 106 of workstations may share a common network. For example, in the illustrated embodiments, the merchant workstations and server system 102 may communicate over a separate private network, rather than over the network 110.

The server system 102 may be associated with a merchant, or other entity, providing search services. For example, the server system 102 may host a search engine or a site hosted by a merchant to provide access to information about products and user opinions about products. For example, the server system may host or access a product database 112 storing a plurality of product records 114. The product records 114 may have one or more brands 116 associated therewith. A brand for a product may represent the manufacturer, seller, importer, or the like for a product and/or a manufacturer of a component part of a product, or other reference to an entity participating in the production and offer for sale of a product.

The method described herein may make use of data known about queries and user responses to queries. Accordingly, the server system 102 may host or access a query database 118 of queries 120. A record for a query may include product click data 122 for a particular query 120. Product clock data 122 may additionally or alternatively include impression data. For example, a record of a query 120 may include a record of the product records returned as a results for the query and an indication of which of the product records were actually selected by the query's author. In some embodiments, for each brand record of a plurality of brands, impressions for the brand (e.g. a number of times product records corresponding to the brand have been included in search results to a query) and click data for the brand (e.g. a number of times product records corresponding to the brand were selected from among search results) may be compiled for the queries 120 and associated with the product record.

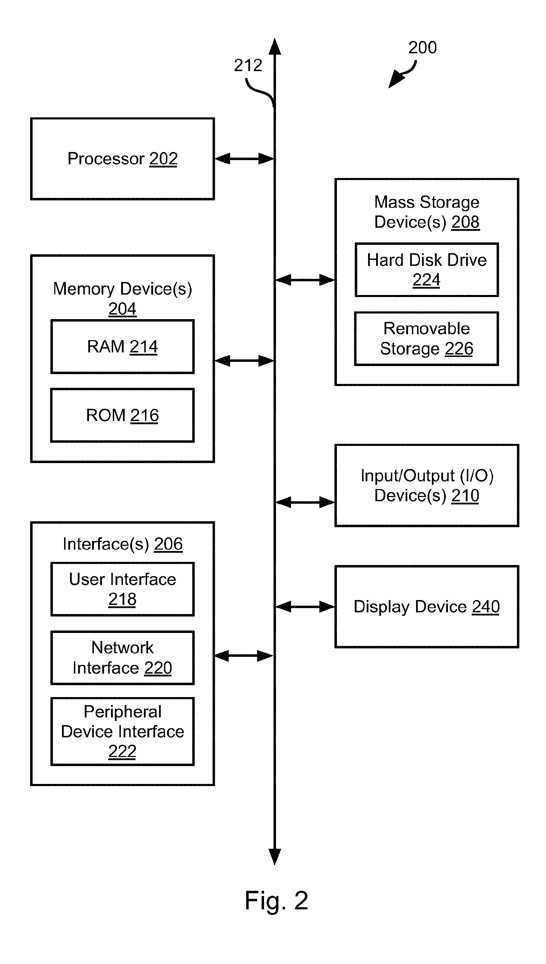

Fig. 2 is a block diagram illustrating an example computing device 200. Computing device 200 may be used to perform various procedures, such as those discussed herein. A server system 102, merchant workstation 104, and customer workstation 106, may have some or all of the attributes of the computing device 200. Computing device 200 can function as a server, a client, or any other computing entity. Computing device can perform various monitoring functions as discussed herein, and can execute one or more application programs, such as the application programs described herein. Computing device 200 can be any of a wide variety of computing devices, such as a desktop computer, a notebook computer, a server computer, a handheld computer, tablet computer and the like.

Computing device 200 includes one or more processor(s) 202, one or more memory device(s) 204, one or more interface(s) 206, one or more non-transitory mass storage device(s) 208, one or more Input/Output (I/O) device(s) 210, and a display device 230 all of which are coupled to a bus 212. Processor(s) 202 include one or more processors or controllers that execute instructions stored in memory device(s) 204 and/or mass storage device(s) 208. Processor(s) 202 may also include various types of computer-readable media, such as cache memory.

Memory device(s) 204 include various computer-readable media, such as volatile memory (e.g., random access memory (RAM) 214) and/or nonvolatile memory (e.g., read-only memory (ROM) 216). Memory device(s) 204 may also include rewritable ROM, such as Flash memory.

Mass storage device(s) 208 include various computer readable media, such as magnetic tapes, magnetic disks, optical disks, solid-state memory (e.g., Flash memory), and so forth. As shown in Fig. 2, a particular mass storage device is a hard disk drive 224. Various drives may also be included in mass storage device(s) 208 to enable reading from and/or writing to the various computer readable media. Mass storage device(s) 208 include removable media 226 and/or non-removable media.

I/O device(s) 210 include various devices that allow data and/or other information to be input to or retrieved from computing device 200. Example I/O device(s) 210 include cursor control devices, keyboards, keypads, microphones, monitors or other display devices, speakers, printers, network interface cards, modems, lenses, CCDs or other image capture devices, and the like.

Display device 230 includes any type of device capable of displaying information to one or more users of computing device 200. Examples of display device 230 include a monitor, display terminal, video projection device, and the like.

Interface(s) 206 include various interfaces that allow computing device 200 to interact with other systems, devices, or computing environments. Example interface(s) 206 include any number of different network interfaces 220, such as interfaces to local area networks (LANs), wide area networks (WANs), wireless networks, and the Internet. Other interface(s) include user interface 218 and peripheral device interface 222. The interface(s) 206 may also include one or more user interface elements 218. The interface(s) 206 may also include one or more peripheral interfaces such as interfaces for printers, pointing devices (mice, track pad, etc.), keyboards, and the like.

Bus 212 allows processor(s) 202, memory device(s) 204, interface(s) 206, mass storage device(s) 208, and I/O device(s) 210 to communicate with one another, as well as other devices or components coupled to bus 212. Bus 212 represents one or more of several types of bus structures, such as a system bus, PCI bus, IEEE 1394 bus, USB bus, and so forth.

For purposes of illustration, programs and other executable program components are shown herein as discrete blocks, although it is understood that such programs and components may reside at various times in different storage components of computing device 200, and are executed by processor(s) 202. Alternatively, the systems and procedures described herein can be implemented in hardware, or a combination of hardware, software, and/or firmware. For example, one or more application specific integrated circuits (ASICs) can be programmed to carry out one or more of the systems and procedures described herein.

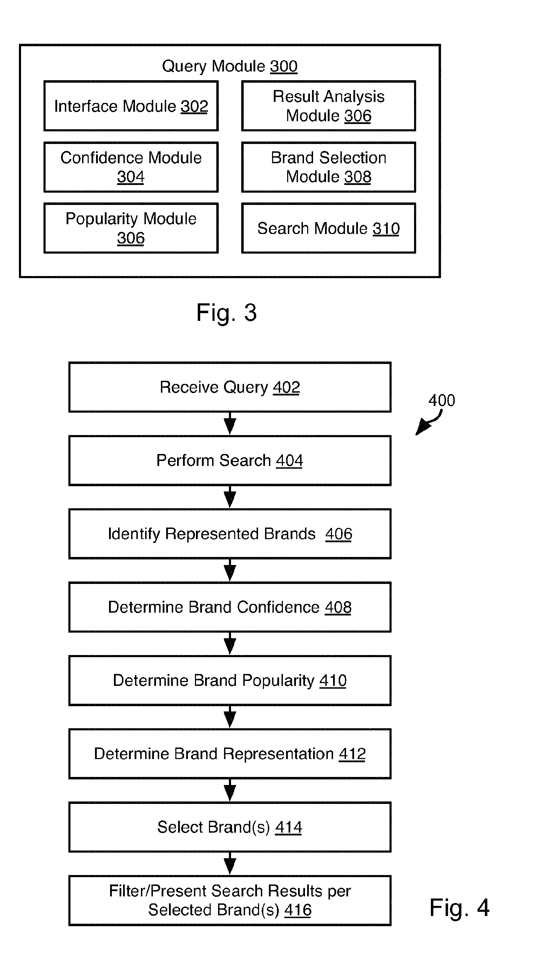

Fig. 3 illustrates a query module 300 including software and/or hardware modules implementing searching methods disclosed herein. In some embodiments, the modules and data of the query module 300 are implemented or accessed by the server system 102 or some other entity that provides an interface to the server system 102.

The query module 300 may include an interface module 302 for receiving queries and transmitting responses to queries to a requesting entity. The query module 300 may be part of a data flow such that a query input to the query module 300 is not received directly from, for example, the customer workstation 106. For example, a query may be expanded or otherwise modified to include keywords associated with concepts identified in the query. The query may also be generated by some other software module executed by the server system 102. Whichever entity originated a query received by the interface module 302, the interface module 302 may route the search results to this requesting entity or to some other entity specified with the query.

The query module 300 may include a confidence module 304. The confidence module 304 evaluates brands associated with search results and determine a confidence associated with some or all of the brands represented in the search results. A method for evaluating the confidence associated with a brand will be described in greater detail hereinbelow.

A popularity module 306 evaluates or retrieves measures of popularity of brands included in search results. As will be described in greater detail below popularity may be based on some or all of a click-through rate for a brand, sales of products corresponding to a brand, and one or more external measures of popularity.

The query module 300 may also include a result analysis module 306. As will be described in greater detail below, brands that are useful in identifying relevant search results may be determined in part based on a composition of a search results, specifically the number of product records corresponding to each brand present in the search results.

Accordingly, a result analysis module 306 may evaluate search results in order to facilitate this determination as described in greater detail below.

A brand selection module 308 may select brands for use in one or both of filtering search results, organizing search results, and presenting search results to users. The selection module 308 may select brands using outputs from some or all of the confidence module 304, popularity module 306, and result analysis module 306. A method used by the selection module 308 to select brands is described in greater detail hereinbelow.

A search module 310 may search a corpus of documents, such as a database of product records, websites accessible over the Internet, or other corpus and return results relevant to a particular query. The search module 310 may implement any search algorithm, e.g. search engine, known in the art for identifying documents relevant to a query, from a simple keyword matching search to a more complex search with word sense disambiguation, contextual searching, or other strategy for identifying relevant documents.

Fig. 4 illustrates a method 400 for identifying relevant search results based on brand. The method 400 may include receiving 402 a query from a customer, such as from a customer workstation 106, and performing 404 a search for the query. Performing a search may include inputting the query to any search algorithm known in the art. The corpus of documents searched may include a database of product records or some other corpus of documents, such as websites accessible over the Internet.

The results of the search may be evaluated to identify 406 brands represented in the search results. For example, each brand having at least one product record corresponding to the brand, or an above-threshold number of product records corresponding thereto, may be deemed to be represented.

The method 400 may further include determining 408 a confidence score associated with some or all of the represented brands. The confidence score for a brand may represent the likelihood that filtering search results based on the brand will enhance the relevance of the search results. A confidence score may indicate a likelihood that product records corresponding to the brand are relevant to a user. In some embodiments, the confidence score may be a measure of popularity of a brand as measured by popularity of product records corresponding to the brand when included in search results. For example, the confidence score may be based on a click-through rate for search results related to the brand, e.g. a number of times users have clicked or otherwise selected a search result belonging to the brand and a number of time search results belonging to the brand have been presented to users.

In some embodiments, a confidence score CS is calculated according to (1),

$$CS = ctr - Z\sqrt{ctr * (1 - ctr)/N} \qquad (1)$$

where ctr is a ratio of user selections of search results belonging to the brand to a number of search results belonging to the brand that have been presented to users, N is the number of a number of search results belonging to the brand that have been presented to users, and Z is an arbitrary constant. Where Z is equal to 1.96, for example, the confidence interval for (1) is 95%.

The method 400 may further include determining 410 the popularity of some or all of the represented brands. In some embodiments, both determining brand confidence 408 and determining 410 brand popularity are both related to popularity of the brand with customers. Accordingly, determining 410 brand popularity may relate to measures of popularity external to a search system, i.e., including data other than impressions and user clicks with respect to search results.

For example, determining 410 the popularity of a brand may include evaluating a number of sales for the brand, such as some or all of sales through one or more ecommerce websites, sales at stores, all sales in a particular country or other market, and global sales for the brand. Determining popularity of a brand may include evaluating other measures of popularity, such as according to references to the brand, or products corresponding to the brand, in media, social media, or other forum. For example, a measure of popularity may include a total number of references to a brand, or a products belonging to a brand, in a social media forum, or a plurality of social media forums, in the past N days. Examples of social media forums include Facebook™, Twitter™, FourSquare™, LinkedIn™, Pinterest™, or the like. Any other metric for characterizing popularity of a word, concept, subject, or the like based on social media content may be applied to a brand and/or products belonging to a brand in order to determine the popularity of a brand according to the social media content.

In some embodiments, a weighted some of one or more metrics of popularity may be combined to determine 410 a brand's popularity. For example, popularity may be calculated as $w_1$*clicks + $w_2$*impressions + $w_3$*sales + $w_4$*external, where $w_n$ is a weighting applied to each metric of popularity, such as a metric determined according to logistic regression or some other machine learning algorithm, "clicks" is a measure of the number of times users select product records corresponding to the brand in search results, "impressions" is the number of times product records corresponding to the brand have been presented in search results, "sales" is any of the above referenced measures of sales, and "external" is a metric based on external factors mentioned above (e.g., mentions in media, social media, or other metric of cultural popularity of a brand). For purposes of this disclosure clicks and impressions may additionally include selections and presentations, respectively, of advertisements for products corresponding to a brand or the brand itself.

The method 400 may include determining 412 a level of representation of each represented brand. Determining 412 a level of representation for a brand may include counting the number of products corresponding to the brand in the search results from the performed 404 search.

One or more brands may be selected 414 based on some or all of the characterization of each brand from steps 408-412. For example, metrics may be summed, weighted and summed, multiplied together, or input to any function known in the art for combining values and effective to relate the values from steps 408-412 to the relevance of a brand.

Using the selected 414 brand the results of the performed 404 search may be filtered or otherwise presented to the customer from whom the query was received. For example, the search results may be filtered to obtain a filtered set of product records that all belong to at least one of the selected 414 departments. The filtered set of product records may then be returned to the user from whom the query was received. In some embodiments, the filtered set may be included with data defining an interface that include user interface elements representing some or all of the represented brands that do not belong to the filtered set. The interface data may invoke display of search results belonging to one or more of these brands upon interaction by the user with one of these user interface elements. For example a link may be included in an interface definition, such as a web page representing the search results. The link may simply display a brand name or may include an instruction to click the link to obtain search results belonging to the brand name. Upon selecting this link, an instruction may be transmitted to the server system 102 to provide the search results corresponding to the selected brand. The server system 102 may then return these search results to the user. In other embodiments, search results are returned to the user for both selected and non-selected brands, and selecting the interface element for a brand invokes display of already-received search results corresponding to the brand on the customer workstation 106.

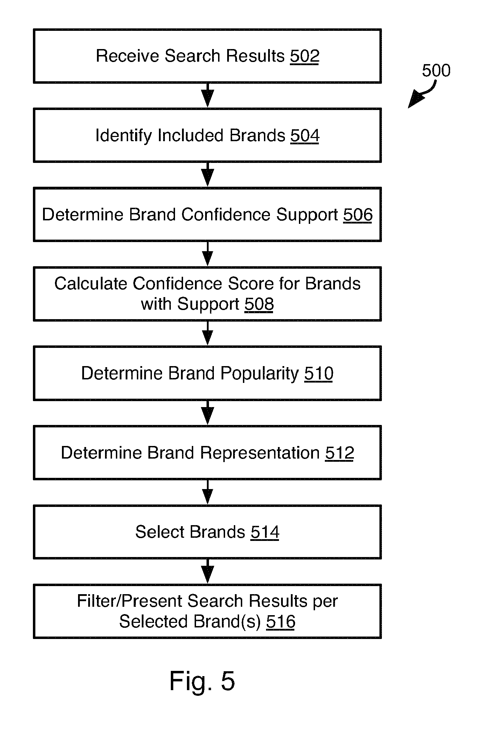

Fig. 5 illustrates an alternative method 500 for selecting search results based on brand. The method 500 may include receiving 502 search results for a query received from a customer, such as results from a search engine. The brands represented in the search results, or having an above-threshold representation, in the search results may be identified 504, such as in the same manner as for the method 400. A support for each of the identified 504 brands may also be determined 506. Support for a brand may include a number of impressions for the brand. As noted above, impression may include a number of times products corresponding to the brand have been included in search results presented to users. Impression may also include a number of times a brand or product corresponding to a brand have been presented to users.

For those brands that have a determined 506 confidence above a threshold value, a confidence score may be calculated. A confidence score may be calculated according to (1). In some embodiments, other measures or characterizations of click-through rate for a brand may be used as the confidence score. Where a brand does not have sufficient support to calculate a confidence score, the confidence score may not be used to rank that brand or the confidence score may simply be set to zero. In some embodiments, a confidence score may be of greater importance than other characterizations of a brand as described below. Accordinly, those brands that lack support to calculate a confidence score may be constrained to be lower ranked than those brands that do have support. In other embodiments, the confidence score is simply weighted such that those brands that have support have a greater likelihood of being higher ranked than unsupported brands.

The method 500 may further include determining 510 brand popularity and determining 512 brand representation in the search results, such as in the same manner as for the method 400. One or more brands may then be selected 514 based on some or all of the calculated confidence score (if calculated for a brand), the brand popularity, and the brand representation. This may include combining these metrics for each represented brand and selecting the top N brands with he highest combined score. Combination may be by summing, weighting and summing, or by multiplying.

In some embodiments, those brands with sufficient support to calculate a confidence score are ranked based on the confidence score. Those brands without support are ranked based on a combination of popularity and representation scores as determined 510, 512 and are placed below those brands with confidence scores in an overall ranking. The top N brands according to the overall ranking may then be selected 514. Those brands with confidence scores may be ranked based on confidence score alone or a combination of the confidence score and one or both of determined 510 popularity and determined 512 representation.

For the selected brands, search results may then be filtered 518 and/or presented to a requesting user according to the selected brands in the same manner as for the method 400.

The present invention may be embodied in other specific forms without departing from its spirit or essential characteristics. The described embodiments are to be considered in all respects only as illustrative, and not restrictive. The scope of the invention is, therefore, indicated by the appended claims, rather than by the foregoing description. All changes which come within the meaning and range of equivalency of the claims are to be embraced within their scope.

**Claims**

1. A method for searching, the method comprising:

   receiving, by a computer system, a query;
   identifying, by the computer system, a plurality of product records relevant to the query;
   identifying, by the computer system, a plurality of brands associated with the plurality of product records;
   selecting, by the computer system, one or more selected brands from the plurality of brands according to both a popularity of each brand of the plurality of brands and a representation of each brand in the search results; and
   transmitting, by the computer system, a representation of the plurality of product records in accordance with the one or more selected brands.

2. The method of claim 1, wherein the popularity of the each brand is based on a sales score based at least partially on sales of products corresponding to the each brand and a confidence score based at least partially on a click-through rate for search results corresponding to the each brand.

3. The method of claim 2, wherein the sales score for the each brand is based at least partially on a metric of cultural popularity of the each brand.

4. The method of claim 2, wherein the scales score for the each brand is calculated as a weighted sum of a sales metric, a user click metric, and an external popularity metric.

5. The method of claim 1, further comprising:

   evaluating for each brand of the plurality of brands a quantity of click-through data for search results corresponding to the each brand;
   wherein the popularity of the each brand is based on a sales score based at least partially on sales of products corresponding to the each brand and a confidence score based at least partially on a click-through rate for search results corresponding to the each brand, if the quantity of click-through data meets a threshold condition; and
   wherein the popularity of the each brand is based on the sales score and excludes the confidence score if the quantity of click-through data does not meet the threshold condition

6. The method of claim 1, wherein the confidence score for a brand of the plurality of brands is calculated according to a click-through rate for search results corresponding to the brand.

7. The method of claim 1, wherein the confidence score (CS) for the each brand is calculated according to

$$CS = ctr - Z\sqrt{ctr * (1 - ctr)/N}$$

   where ctr is a ratio of user selections to user impressions corresponding to the each brand, N is the number of user impressions corresponding to the each brand, and Z is an arbitrary constant.

8. The method of claim 7, wherein Z is greater than or equal to 1.96.

9. The method of claim 1, wherein transmitting, by the computer system, the representation of the plurality of documents in accordance with the one or more selected brands further comprises:

   transmitting those documents of the plurality of documents corresponding to the one or more selected brands.

10. The method of claim 1, wherein transmitting, by the computer system, the representation of the plurality of product records in accordance with the one or more selected brands further comprises:

   transmitting data defining an interface presenting those product records of the plurality of product records corresponding to the selected brands and interface elements to invoke display of those product records of the plurality of product records corresponding to a brand other than one of the one or more selected brands.

11. A system for searching, the system comprising one or more processors and one or more memory devices operably coupled to the one or more processors, the one or more memory devices storing executable and operational data effective to cause the one or more processors to:

receive a query;
identify a plurality of product records relevant to the query;
identify a plurality of brands associated with the plurality of product records;
select one or more selected brands from the plurality of brands according to both a popularity of each brand of the plurality of brands and a representation of each brand in the search results; and
transmit a representation of the plurality of product records in accordance with the one or more selected brands.

12. The system of claim 11, wherein the popularity of the each brand is based on a sales score based at least partially on sales of products corresponding to the each brand and a confidence score based at least partially on a click-through rate for search results corresponding to the each brand.

13. The system of claim 12, wherein the sales score for the each brand is based at least partially on a metric of cultural popularity of the each brand.

14. The system of claim 12, wherein the scales score for the each brand is calculated as a weighted sum of a sales metric, a user click metric, and an external popularity metric.

15. The system of claim 11, wherein the executable and operational data are further effective to cause the one or more processors to evaluate for each brand of the plurality of brands a quantity of click-through data for search results corresponding to the each brand;
wherein the popularity of the each brand is based on a sales score based at least partially on sales of products corresponding to the each brand and a confidence score based at least partially on a click-through rate for search results corresponding to the each brand, if the quantity of click-through data meets a threshold condition; and
wherein the popularity of the each brand is based on the sales score and excludes the confidence score if the quantity of click-through data does not meet the threshold condition

100

Network 110

102

104
104
104

106
106
106

Query Database 118

Queries 120

Product Clicks
122

Product Database 112

Product Records 114

Brand 116

Fig. 1

**Fig. 2**

## Query Module 300

| | |
|---|---|
| Interface Module 302 | Result Analysis Module 306 |
| Confidence Module 304 | Brand Selection Module 308 |
| Popularity Module 306 | Search Module 310 |

## Fig. 3

Receive Query 402

↓

Perform Search 404

↓

Identify Represented Brands 406

↓

Determine Brand Confidence 408

↓

Determine Brand Popularity 410

↓

Determine Brand Representation 412

↓

Select Brand(s) 414

↓

Filter/Present Search Results per Selected Brand(s) 416

400

## Fig. 4

Receive Search Results 502

↓

Identify Included Brands 504

↓

Determine Brand Confidence Support 506

↓

Calculate Confidence Score for Brands
with Support 508

↓

Determine Brand Popularity 510

↓

Determine Brand Representation 512

↓

Select Brands 514

↓

Filter/Present Search Results per
Selected Brand(s) 516

500

Fig. 5

Europäisches
Patentamt

European
Patent Office

Office européen
des brevets

**EUROPEAN SEARCH REPORT**

Application Number

EP 14 15 9502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/218141 A1 (TUTTLE TIMOTHY D [US] ET AL) 28 September 2006 (2006-09-28)<br>* abstract *<br>* paragraph [0011] - paragraph [0015] *<br>* paragraph [0020] - paragraph [0097] *<br>----- | 1-14 | INV.<br>G06F17/30 |
| X | US 2008/033939 A1 (KHANDELWAL SHASHIKANT [US]) 7 February 2008 (2008-02-07)<br>* abstract *<br>* paragraph [0015] - paragraph [0051] *<br>----- | 1-15 | |
| A | US 2009/125502 A1 (TING CHYR-CHONG [US] ET AL) 14 May 2009 (2009-05-14)<br>* abstract *<br>----- | 1-15 | |
| A | US 2009/037402 A1 (JONES ROSIE [US] ET AL) 5 February 2009 (2009-02-05)<br>* abstract *<br>* paragraph [0015] - paragraph [0037] *<br>----- | 1-15 | |
| | | | TECHNICAL FIELDS SEARCHED (IPC)<br><br>G06F |

The present search report has been drawn up for all claims

| Place of search | Date of completion of the search | Examiner |
|---|---|---|
| The Hague | 30 April 2014 | Dumitrescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.                    EP 14 15 9502

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2014

| Patent document cited in search report | | Publication date | Patent family member(s) | | Publication date |
|---|---|---|---|---|---|
| US 2006218141 | A1 | 28-09-2006 | US | 2006218141 A1 | 28-09-2006 |
| | | | US | 2008201323 A1 | 21-08-2008 |
| | | | US | 2011173212 A1 | 14-07-2011 |
| | | | US | 2013080424 A1 | 28-03-2013 |
| | | | US | 2013173609 A1 | 04-07-2013 |
| | | | WO | 2006055983 A2 | 26-05-2006 |
| US 2008033939 | A1 | 07-02-2008 | US | 2008033939 A1 | 07-02-2008 |
| | | | WO | 2008019007 A2 | 14-02-2008 |
| US 2009125502 | A1 | 14-05-2009 | NONE | | |
| US 2009037402 | A1 | 05-02-2009 | US | 2009037402 A1 | 05-02-2009 |
| | | | US | 2009037410 A1 | 05-02-2009 |

EPO FORM P0459

For more details about this annex : see Official Journal of the European Patent Office, No. 12/82